# EUROPÄISCHE PATENTSCHRIFT

(11) **EP 3 401 360 B1**
(45) Veröffentlichungstag und Bekanntmachung des Hinweises auf die Patenterteilung: **11.03.2020**
(21) Anmeldenummer: 18162463.6
(22) Anmeldetag: 19.03.2018
(51) Int. Cl.: C08L 9/00, C08L 17/00, B60C 1/00, B60C 15/04

(54) **FAHRZEUGREIFEN**
VEHICLE TYRES
PNEU DE VÉHICULE

(30) Priorität: 09.05.2017 DE 102017207813
(43) Veröffentlichungstag der Anmeldung: 14.11.2018
(73) Patentinhaber: Continental Reifen Deutschland GmbH, 30165 Hannover (DE)
(72) Erfinder: Efimov, Konstantin, 30453 Hannover (DE); Müller, Matthias-Stephan, 30827 Garbsen (DE); Kretschmar, Silke, 30655 Hannover (DE); Schmidt, Peter, 31275 Lehrte (DE)
(74) Vertreter: Finger, Karsten

(56) Entgegenhaltungen:
- WO-A1-2009/089952
- US-A- 3 269 444
- US-A1- 2010 249 353
- US-A1- 2013 281 581
- US-A1- 2017 114 222

## Beschreibung

Die Erfindung betrifft einen Fahrzeugreifen.

Es ist bekannt, dass Fahrzeugreifen, insbesondere Fahrzeugluftreifen, Wulstbereiche aufweisen, die so ausgeführt sind, dass der Reifen hierüber auf einer Felge aufgebracht werden kann. Um den Reifen auf der Felge zu halten und dem Reifen eine ausreichende Stabilität zu geben, umfasst der Wulstbereich Kerndrähte, die üblicherweise aus beschichtetem Stahl gefertigt sind und die mit einer Kerndrahtgummierung ummantelt sind. Die Kerndrahtgummierung ist üblicherweise eine Kautschukmischung und wird auch Gummierungsmischung genannt. Die Kerndrahtgummierung umgibt dabei die Kerndrähte, wobei zwischen Draht und Gummierung auch ein oder mehrere chemische Haftsysteme aufgebracht sein können.
Für die Haltbarkeit ist es außerordentlich wichtig, dass die Kerndrähte an der Gummierungsmischung haften. Die Gummierungsmischung muss gleichzeitig mechanischen Anforderungen gerecht werden und hierzu insbesondere eine ausreichende Härte und Steifigkeit aufweisen.
Im Stand der Technik ist bekannt, dass derartige Kautschukmischungen der Kerndrahtgummierung einen vergleichsweise hohen Füllgrad (mehr als 70 phr) an verstärkendem Füllstoff, insbesondere Industrieruß, aufweisen.
Industrieruße weisen jedoch einen hohen Anteil an polyzyklischen aromatischen Kohlenwasserstoffen (PAK) auf. Polyzyklische aromatische Kohlenwasserstoffe sind gesundheitsschädlich.

Der vorliegenden Erfindung liegt daher die Aufgabe zugrunde, einen Fahrzeugreifen umfassend Wulstbereiche mit Wulstkernen aus Kerndrähten und wenigstens einer Kerndrahtgummierung, wobei jeder Kerndraht wenigstens von einer Kerndrahtgummierung umgeben ist, bereitzustellen, der im Vergleich zum Stand der Technik weniger gesundheitsschädlich ist, und zwar ohne, dass die Haltbarkeit und die Stabilität negativ beeinträchtigt werden. Der Reifen soll bei gleicher Haltbarkeit und Stabilität ökologisch und ökonomisch optimiert sein. Gleichzeitig soll der Reifen bzw. die Mischung der Kerndrahtgummierung weiterhin gut prozessfähig sein.

Gelöst wird die Aufgabe erfindungsgemäß dadurch, dass wenigstens eine Kerndrahtgummierung wenigstens eine Kautschukmischung umfasst, die ein Füllstoffsystem mit 5 bis 100 Gew.-% wenigstens eines Pyrolyse-Rußes und 0 bis 95 Gew.-% wenigstens eines Industrierußes jeweils bezogen auf die Gesamtmenge aus Pyrolyse-Ruß und Industrieruß enthält.

Überraschenderweise kann in der Kerndrahtgummierung des erfindungsgemäßen Fahrzeugreifens Pyrolyse-Ruß statt "herkömmlichen" Industrierußen eingesetzt werden, ohne dass sich die Eigenschaften, insbesondere die Haftung an Kerndrähte für eine ausreichende Haltbarkeit sowie Härte und Steifigkeit für eine ausreichende Stabilität verschlechtern. Zudem ergeben sich durch den Einsatz von Pyrolyse-Ruß und damit einem recycelten Material ökologische Vorteile. Damit ist die Kerndrahtgummierung bzw. der Fahrzeugreifen vergleichsweise kostengünstig und umweltfreundlich. Dabei lässt sich die Kerndrahtgummierung auch mit hohem Anteil an Pyrolyse-Ruß noch verarbeiten, sodass der Fahrzeugreifen weiterhin gut herstellbar ist.

Unter erfindungsgemäßen "Fahrzeugreifen" werden im Rahmen der vorliegenden Erfindung alle Reifen mit einem Wulstbereich verstanden, die eine Konstruktion aus Kerndrähten und Kerndrahtgummierung aufweisen.
Insbesondere sind hierunter alle Fahrzeugluftreifen umfasst, wie insbesondere PKW-Reifen, LKW-Reifen, Zweiradreifen.

Der erfindungsgemäße Fahrzeugreifen umfasst dabei einen Wulstkern aus Kerndrähten und wenigstens eine Kerndrahtgummierung, wobei jeder Kerndraht wenigstens von einer Kerndrahtgummierung umgeben ist. Dies bedeutet, dass prinzipiell auch zwei oder mehrere verschiedene Kerndrahtgummierungen aus verschiedenen Kautschukmischungen in einem Wulstbereich vorliegen können.
Bevorzugt handelt es sich jedoch um eine Kerndrahtgummierung, die eine Kautschukmischung umfasst, die für alle Kerndrähte in einem Wulstbereich die gleiche ist. Mehrere gummierte Kerndrähte sind in einem Wulstbereich zu einem Wulstkern zusammengefasst.
Gemäß einer bevorzugten Ausführungsform der Erfindung ist der Wulstkern aus gummierten Kerndrähten zusätzlich mit einer Gummierungsmischung umgeben, wobei es sich auch hier bevorzugt um die gleiche Mischung handelt wie die der Kerndrahtgummierung.
Oberhalb des Wulstkernes befinden sich üblicherweise und bevorzugt ein oder mehrere Wulstkernreiter zur Optimierung der Reifeneigenschaften.

Im Hinblick auf die sonstigen Reifenbauteile ist der erfindungsgemäße Fahrzeugreifen je nach Art und Anforderung wie im Stand der Technik bekannt ausgeführt. Insbesondere weist er bevorzugt einen Laufstreifen, Seitenwände, ein Gürtelpaket, eine Karkasse und ggf. eine Innenschicht auf.

Wenigstens eine Kerndrahtgummierung des erfindungsgemäßen Fahrzeugreifens umfasst wenigstens eine Kautschukmischung, die ein Füllstoffsystem mit 5 bis 100 Gew.-% wenigstens eines Pyrolyse-Rußes und 0 bis 95 Gew.-% wenigstens eines Industrierußes jeweils bezogen auf die Gesamtmenge aus Pyrolyse-Ruß und Industrieruß enthält.

Im Folgenden werden die Bestandteile dieser wenigstens einen Kautschukmischung näher erläutert.
Pyrolyse-Ruß ist mit 5 bis 100 Gew.-% bezogen auf die Gesamtmenge aus Pyrolyse-Ruß und Industrieruß erfindungsgemäß in der Kautschukmischung der Kerndrahtgummierung enthalten.
Pyrolyse-Ruß ist dem Fachmann bekannt. Er wird wie beispielsweise in "Rubber Chemistry and Technology", Vol. 85, Nr. 3, Seiten 408 bis 449 (2012), insbesondere auf den Seiten 438 und 440 und 442, beschrieben, durch thermische Zersetzung von organischen Materialien bei 550 bis 800 °C unter Ausschluss von Sauerstoff oder mittels Vakuumpyrolyse bei vergleichsweise niedrigen Temperaturen im Bereich von 500 °C erhalten.
Im Rahmen der vorliegenden Erfindung handelt es sich bei den organischen Materialien um Altreifen und/oder vulkanisierten Produktionsabfällen aus der Reifenherstellung und/oder vulkanisierten Schläuchen, d. h. anfallende Abfallprodukte, die entsorgt werden müssen. Die Pyrolyse und Gewinnung von Pyrolyse-Ruß daraus, der erfindungsgemäß wieder Reifenmischungen zugesetzt wird, stellt somit einen Recyclingprozess dar.
Ein derartiger Pyrolyse-Ruß unterscheidet sich von bekannten Rußen, wie Industrierußen, insbesondere den ASTM-Rußen wie N660, u.a. im höheren Aschegehalt und gleichzeitig geringerem Gehalt an polyzyklischen aromatischen Kohlenwasserstoffen (PAK), wie beispielsweise der Homepage der Firma BlackBear Carbon BV zu entnehmen ist, http://www.blackbearcarbon.com/rfp-international/.
Der Pyrolyse-Ruß ist bevorzugt mittels Pyrolyse aus Altreifen und/oder vulkanisierten Produktionsabfällen aus der Reifenherstellung und/oder vulkanisierten Schläuchen hergestellt.
Besonders bevorzugt wurde der Pyrolyseruß aus Altreifen und/oder Schläuchen hergestellt, ganz besonders bevorzugt aus Altreifen.
Bei vulkanisierten Produktionsabfällen aus der Reifenherstellung kann es sich um alle denkbaren vulkanisierten Kautschukmischungen für Fahrzeugreifen handeln, die Kautschukmischungen im Verbund mit Festigkeitsträgern einschließen.

Im Rahmen der vorliegenden Erfindung wird unter dem Ausdruck "Pyrolyse-Ruß, der mittels Pyrolyse aus Altreifen und/oder vulkanisierten Produktionsabfällen aus der Reifenherstellung und/oder vulkanisierten Schläuchen hergestellt wurde" alle dem Fachmann bekannten Pyrolyse-Ruße aus Altreifen und/oder vulkanisierten Produktionsabfällen aus der Reifenherstellung und/oder vulkanisierten Schläuchen verstanden.

Ein geeigneter Pyrolyse-Ruß kann beispielsweise von der Fa. BBC unter dem Handelsnamen BBC500 oder von der Fa. Pyrolyx AG unter dem Handelsnamen CB e 603 erhalten werden.

Der erfindungsgemäß enthaltene Pyrolyse-Ruß weist bevorzugt einen Aschegehalt von 5 bis 30 Gew.-%, besonders bevorzugt 10 bis 30 Gew.-%, ganz besonders bevorzugt 10 bis 20 Gew.-%, auf. Gemäß einer bevorzugten Ausführungsform der Erfindung beträgt der Aschegehalt 15 bis 20 Gew.-%.
Der Aschegehalt bezieht sich nur auf den Pyrolyse-Ruß und wird mittels thermogravimetrischer Analyse (TGA) gemäß ASTM D1506 des Pyrolyse-Rußes bestimmt.
Mit einem derartigen Aschegehalt wird insbesondere die Aufgabe gelöst, dass die Eigenschaften wie insbesondere das Haltbarkeit und Stabilität des erfindungsgemäßen Fahrzeugreifens nicht verschlechtert werden und gleichzeitig eine umwelt- und gesundheitsfreundliche Alternative bereitgestellt wird.

Der erfindungsgemäß enthaltene Pyrolyse-Ruß weist ferner bevorzugt einen SchwefelGehalt von größer als 1 Gew.-%, besonders bevorzugt größer als 2 Gew.-%, ganz besonders bevorzugt 2 bis 6 Gew.-%, wiederum ganz besonders bevorzugt 2 bis 4 Gew.-%, und wiederum ganz besonders bevorzugt 2,2 bis 4 Gew.-%, auf.
Mit einem derartigen Schwefelgehalt wird insbesondere die Aufgabe gelöst, dass die Eigenschaften wie insbesondere das Haltbarkeit und Stabilität des erfindungsgemäßen Fahrzeugreifens nicht verschlechtert werden und gleichzeitig eine umwelt- und gesundheitsfreundliche Alternative bereitgestellt wird.

Der Schwefelgehalt bezieht sich nur auf den Pyrolyse-Ruß und wird mittels ASTM D4239 des Pyrolyse-Rußes bestimmt.

Der erfindungsgemäß enthaltene Pyrolyse-Ruß weist ferner bevorzugt einen Kohlenstoffgehalt von 64 bis 87 Gew.-%, besonders bevorzugt 74 bis 87 Gew.-%, ganz besonders bevorzugt 78 bis 87 Gew.-%, auf.

Dem Fachmann ist bekannt, dass sich die Gewichtsanteile von Pyrolyse-Ruß aus enthaltener Asche, Schwefel und überwiegend (> 50 Gew.-%) Kohlenstoff zusammensetzen.

Der erfindungsgemäß enthaltene Pyrolyse-Ruß weist bevorzugt eine Jodadsorptionszahl gemäß ASTM D 1510 von 100 bis 130 g/kg und eine DBP-Zahl gemäß ASTM D 2414 von 50 bis 100 ml/100g, besonders bevorzugt 75 bis 95 ml/100g auf.

Ein wesentlicher Vorteil der vorliegenden Erfindung ist somit, dass Pyrolyse-Ruß eine gesundheits- und umweltfreundliche und zudem kostengünstige Alternative zu Industrierußen ist.

Das Füllstoffsystem umfasst optional mit 0 bis 95 Gew.-% wenigstens einen Industrieruß.

Im Rahmen der vorliegenden Erfindung wird unter dem Begriff "Industrieruße" die für Reifenmischungen bekannten Ruße, die keine Pyrolyse-Ruße sind, verstanden, die gemäß Römpp-Online-Lexikon © 2016 Georg Thieme Verlag KG (Stand 08.01.2016) üblicherweise einen Aschegehalt von weniger als 1 Gew.-% aufweisen und insbesondere sogenannte Furnace-Ruße, Gasruße oder Flammruße sind.

Gemäß einer bevorzugten Ausführungsform der Erfindung umfasst das Füllstoffsystem wenigstens einen Industrieruß, welcher eine DBP-Zahl gemäß ASTM D 2414 von 60 bis 130 ml/100 g und eine Jodadsorptionszahl gemäß ASTM D 1510 von 25 bis 60 g/kg aufweist.
Die DBP-Zahl gemäß ASTM D 2414 bestimmt das spezifische Absorptionsvolumen eines Rußes mittels Dibutylphthalat.
Geeignete Ruße sind insbesondere und beispielsweise N660 und N550, wobei der Ruß N 660 mit einer Jodadsorptionszahl gemäß ASTM D 1510 von 36 g/kg und einer DBP-Zahl gemäß ASTM D 2414 von 90 ml/100g gemäß einer vorteilhaften Ausführungsform der Erfindung besonders bevorzugt ist.

Für den Fall, dass das Füllstoffsystem wenigstens einen Industrieruß umfasst, beträgt der Gewichtsanteil wenigstens 0,1 Gew.-%, wodurch der Gewichtsanteil des wenigstens einen Pyrolyse-Rußes dann entsprechend bis zu 99,9 Gew.-% beträgt.

Bevorzugt beträgt der Anteil des wenigstens einen Pyrolyse-Rußes am Füllstoffsystem 15 bis 100 Gew.-% bzw. 15 bis 99,9 Gew.-%.

Gemäß einer bevorzugten Ausführungsform der Erfindung beträgt der Anteil des wenigstens einen Pyrolyse-Rußes am Füllstoffsystem 15 bis 55 Gew.-%. Hierdurch wird die der Erfindung zugrunde liegende Aufgabe sehr gut gelöst, während der Reifen gleichzeitig kostenoptimiert gefertigt ist.

Gemäß einer weiteren bevorzugten Ausführungsform der Erfindung beträgt der Anteil des wenigstens einen Pyrolyse-Rußes am Füllstoffsystem 55 bis 100 Gew.-%, besonders bevorzugt 70 bis 100 Gew.-%.
Mit diesen vergleichsweise hohen Mengen an Pyrolyse-Ruß wird der Reifen weiter hinsichtlich der zugrunde liegenden Aufgabe optimiert ohne, dass sich Einbußen hinsichtlich Stabilität und Haltbarkeit ergeben. Zudem ist die Mischung auch mit einer hohen Menge an Pyrolyse-Ruß noch prozessierbar.

Der Pyrolyse-Ruß wird wie Industrieruß in die Kautschukmischung der Kerndrahtgummierung eingearbeitet. Je nach Auslegung der Mischungseigenschaften, könnte es bevorzugt sein, etwas mehr Pyrolyse-Ruß anstelle der ersetzten Menge an Industrieruß zu verwenden, um eine vergleichbare Härte zu erzielen.

Das erfindungsgemäß in der Kerndrahtgummierung enthaltene Füllstoffsystem bezieht sich auf den oder die enthaltenen Pyrolyse-Ruß(e) und optional den oder die enthaltenen Industrieruß(e). Es ist dabei denkbar, dass weitere Füllstoffe in der Kautschukmischung der Kerndrahtgummierung enthalten sind, welche jedoch auf die Gewichtsanteile von Pyrolyse-Ruß(en) und optional Industrieruß(en) keinen Einfluss haben.

Als weitere Füllstoffe können alle in der Kautschukindustrie denkbaren Füllstoffe vorhanden sein, wie beispielsweise Kieselsäure (auch Silika genannt), Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).
Weitere ggf. verstärkende Füllstoffe sind z. B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filier". Zinkoxid gehört im Rahmen der vorliegenden Erfindung nicht zu den Füllstoffen.

Unabhängig davon, ob ggf. weitere Füllstoffe vorhanden sind, enthält die Kautschukmischung der Kerndrahtgummierung insgesamt 80 bis 160 phr des Füllstoffsystems aus Pyrolyse-Ruß und Industrieruß und damit einen im Vergleich zu anderen Gummierungsmischungen, wie einer Gürtelgummierung, hohen Füllgrad an "rußbasierten Füllstoffen".
Überraschenderweise ist es insbesondere in der Kerndrahtgummierung mit einem hohen Füllgrad trotz der hohen Anforderungen hinsichtlich Haltbarkeit und Stabilität möglich, einen Teil oder sogar einen Großteil (> 55 Gew.-%) des Industrierußes durch Pyrolyse-Ruß auszutauschen.

Die in dieser Schrift verwendete Angabe phr (parts per hundred parts of rubber by weight) ist die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Gemäß einer vorteilhaften Ausführungsform der Erfindung enthält die Kautschukmischung 10 bis 30 phr wenigstens eines Pyrolyse-Rußes und 70 bis 130 phr, bevorzugt 90 bis 110 phr, wenigstens eines Industrierußes.

Gemäß einer weiteren vorteilhaften Ausführungsform der Erfindung enthält die Kautschukmischung 30 bis 70 phr, bevorzugt 45 bis 70 phr wenigstens eines Pyrolyse-Rußes und 50 bis 130 phr, bevorzugt 50 bis 80 phr, wenigstens eines Industrierußes.

Gemäß einer weiteren vorteilhaften Ausführungsform der Erfindung enthält die Kautschukmischung 70 bis 125 phr, bevorzugt 75 bis 110 phr wenigstens eines Pyrolyse-Rußes und 35 bis 80 phr, bevorzugt 35 bis 60 phr, wenigstens eines Industrierußes.

Gemäß einer weiteren vorteilhaften Ausführungsform der Erfindung enthält die Kautschukmischung 70 bis 150 phr, bevorzugt 75 bis 140 phr wenigstens eines Pyrolyse-Rußes und 0 bis 35 phr, bevorzugt 0 bis 10 phr, besonders bevorzugt 0 bis 0,5 phr wenigstens eines Industrierußes.

Es ist bei allen Ausführungsformen auch ein Gemisch verschiedener Pyrolyse-Ruße denkbar, wobei die angegebenen Mengen sich immer auf die Gesamtmenge an enthaltenen Pyrolyse-Rußen beziehen.

Die Kautschukmischung der Kerndrahtgummierung enthält bevorzugt wenigstens einen Dienkautschuk.

Der Dienkautschuk ist bevorzugt ausgewählt aus der Gruppe bestehend aus synthetischem Polyisopren (IR) und/oder natürlichem Polyisopren (NR) und/oder epoxidiertem Naturkautschuk (ENR) und/oder Styrol-Butadien-Copolymer (SBR, auch Styrol-Butadien-Kautschuk) und/oder Butadien-Kautschuk (BR) und/oder Styrol-Isopren-Copolymer und/oder Styrol-Isopren-Butadien-Terpolymer und/oder Ethylen-Propylen-Dienkautschuk, wobei der Dienkautschuk modifiziert sein kann.
Bei der Modifizierung kann es sich um solche mit Hydroxy-Gruppen und/oder EthoxyGruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Besonders bevorzugt ist der wenigstens eine Dienkautschuk ausgewählt aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR).

Gemäß einer vorteilhaften Ausführungsform der Erfindung enthält die Kautschukmischung 2 bis 20 phr wenigstens eines synthetischen Polyisoprens und/oder natürlichen Polyisoprens, wobei hiervon auch 2 bis 20 phr eines Gemisches aus synthetischem und natürlichem Polyisopren umfasst sind.
Bevorzugt enthält die Kautschukmischung in dieser Ausführungsform 80 bis 98 phr wenigstens eines Styrol-Butadien-Kautschuks, bevorzugt wenigstens eines emulsionspolymerisierten Styrol-Butadien-Kautschuks.
Gemäß einer weiteren vorteilhaften Ausführungsform der Erfindung enthält die Kautschukmischung 22 bis 80 phr wenigstens eines synthetischen Polyisoprens und/oder natürlichen Polyisoprens, wobei hiervon auch 22 bis 80 phr eines Gemisches aus synthetischem und natürlichem Polyisopren umfasst sind.
Bevorzugt enthält die Kautschukmischung in dieser Ausführungsform 20 bis 78 phr wenigstens eines Styrol-Butadien-Kautschuks, bevorzugt wenigstens eines emulsionspolymerisierten Styrol-Butadien-Kautschuks.

Gemäß einer weiteren vorteilhaften Ausführungsform der Erfindung enthält die Kautschukmischung 25 bis 35 phr wenigstens eines synthetischen Polyisoprens und/oder natürlichen Polyisoprens, wobei hiervon auch 25 bis 35 phr eines Gemisches aus synthetischem und natürlichem Polyisopren umfasst sind.
Bevorzugt enthält die Kautschukmischung in dieser Ausführungsform 65 bis 75 phr wenigstens eines Styrol-Butadien-Kautschuks, bevorzugt wenigstens eines emulsionspolymerisierten Styrol-Butadien-Kautschuks.

Gemäß einer weiteren vorteilhaften Ausführungsform der Erfindung enthält die Kautschukmischung 65 bis 75 phr wenigstens eines synthetischen Polyisoprens und/oder natürlichen Polyisoprens, wobei hiervon auch 65 bis 75 phr eines Gemisches aus synthetischem und natürlichem Polyisopren umfasst sind.
Bevorzugt enthält die Kautschukmischung in dieser Ausführungsform 25 bis 35 phr wenigstens eines Styrol-Butadien-Kautschuks, bevorzugt wenigstens eines emulsionspolymerisierten Styrol-Butadien-Kautschuks.

Gemäß einer weiteren vorteilhaften Ausführungsform der Erfindung enthält die Kautschukmischung 40 bis 60 phr wenigstens eines synthetischen Polyisoprens und/oder natürlichen Polyisoprens, wobei hiervon auch 40 bis 60 phr eines Gemisches aus synthetischem und natürlichem Polyisopren umfasst sind.
Bevorzugt enthält die Kautschukmischung in dieser Ausführungsform 60 bis 40 phr wenigstens eines Styrol-Butadien-Kautschuks, bevorzugt wenigstens eines emulsionspolymerisierten Styrol-Butadien-Kautschuks.

Es können in der Kautschukmischung noch 0 bis 100 phr, bevorzugt 0,1 bis 70 phr, bevorzugt 0,1 bis 30 phr, zumindest eines Weichmachers vorhanden sein.
Hierzu gehören alle dem Fachmann bekannten Weichmacher wie aromatische, naphthenische oder paraffinische Mineralölweichmacher, z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Faktisse oder Weichmacherharze oder Flüssig-Polymere, deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung Flüssig-Polymere als Weichmacher eingesetzt, so gehen diese nicht als Kautschuk in die Berechnung der Zusammensetzung der Polymermatrix ein.
Der Weichmacher ist bevorzugt ausgewählt aus der Gruppe bestehend aus den oben genannten Weichmachern.

Mineralöle sind als Weichmacher besonders bevorzugt.
Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Des Weiteren kann die erfindungsgemäße Kautschukmischung übliche Zusatzstoffe in üblichen Gewichtsteilen enthalten. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure),
c) Wachse,
d) Harze, insbesondere Klebharze, die keine Weichmacherharze sind,
e) Mastikationshilfsmittel, wie z. B. 2,2'-Dibenzamidodiphenyldisulfid (DBD und
f) Verarbeitungshilfsmittel, wie z.B. Fettsäuresalze, wie z.B. Zinkseifen, und Fettsäureester
und deren Derivate.

Insbesondere wird der Kautschukmischung in der Regel noch ein geeignetes Haftsystem, oft in Form von Klebharzen in Verbindung mit Schwefel, zugefügt.
Die Haftsysteme sind dem Fachmann bekannt.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe finden sich noch 0,1 bis 10 phr, bevorzugt 0,2 bis 8 phr, besonders bevorzugt 0,2 bis 4 phr, Zinkoxid (ZnO).
Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m²/g, wie z.B. so genannte "nano-Zinkoxide", verwendet werden.
Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert.

Die Vulkanisation wird ggf. in Anwesenheit von Schwefel und/oder Schwefelspendern und mit Hilfe von Vulkanisationsbeschleunigern durchgeführt, wobei einige Vulkanisationsbeschleuniger zugleich als Schwefelspender wirken können und Schwefel und/oder Schwefelspender sowie Vulkanisationsbeschleuniger in den im Stand der Technik bekannten Mengen eingesetzt werden.
Schwefel und/oder Schwefelspender sowie ein oder mehrere Beschleuniger werden im letzten Mischungsschritt in den genannten Mengen der Kautschukmischung zugesetzt.
Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.
Bevorzugt ist die Verwendung wenigstens eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder 2,2'-Dibenzothiazyldisulfid (MBTS) und/oder N-tert.Butyl-2-benzothiazylsulfenamid (TBBS).

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger.

Außerdem können in der Kautschukmischung Vulkanisationsverzögerer vorhanden sein.

Die Herstellung der beschriebenen Gummierungsmischung und der Gummierung und Anordnung der Kerndrähte zu einem Wulstkern erfolgt auf dem Fachmann bekannte Weise, in dem zunächst in einer oder mehreren Grundmischstufen, bevorzugt in zwei Grundmischstufen, eine Grundmischung erzeugt wird. Anschließend wird bei einer geringeren Temperatur durch Zugabe der Vulkanisationschemikalien eine Fertigmischung erzeugt.
Üblicherweise werden die Kerndrähte mit der so erhaltenen Gummierungsmischung ummantelt.

Die anschließende Herstellung des erfindungsgemäßen Fahrzeugreifens erfolgt ebenfalls aus dem Fachmann bekannte Weise, wobei die einzelnen Bauteile miteinander in Kontakt gebracht werden, üblicherweise auf einer Reifenaufbaumaschine, und der entstandene Reifenrohling anschließend vulkanisiert wird.

Die Erfindung soll nun anhand von Vergleichs- und Ausführungsbeispielen, die in Tabelle 1 zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt.
Die unter V1 angegebenen Werte sind somit Werte einer Vergleichsmischung aus dem Stand der Technik. Bei sämtlichen in der Tabelle enthaltenen Mischungsbeispielen sind die angegebenen Mengenangaben Gewichtsteile, die auf 100 Gewichtsteile Gesamtkautschuk bezogen sind (phr). Die Menge des Pyrolyse-Rußes ist zusätzlich in Gew.-% bezogen auf das Füllstoffsystem als Anteil an der Gesamtmenge an enthaltenen Pyrolyse-Rußen und Industrierußen (Gew.-% des FSS) angegeben.
Die Mischungsherstellung erfolgte unter üblichen Bedingungen in drei Stufen in einem Labortangentialmischer, wobei je nach Mengen ein Teil des Industrierußes (40 phr bei V1 bis E3) oder ein Teil des Pyrolyserußes (45 phr bei E4) erst in der zweiten Grundmischstufe zugegeben wurden. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Shore-A-Härte bei Raumtemperatur (RT) und 70 °C gemäß DIN ISO 7619-1
- Zugfestigkeit, Bruchdehnung und Spannungswert bei 50 % (Modul 50 bzw. kurz M50) und 100 % (Modul 100 bzw. kurz M100) statischer Dehnung bei Raumtemperatur gemäß DIN 53 504
- Mittlerer dynamischer Speichermodul E'ₘₑₐₙ bei 55 °C aus dynamisch-mechanischer Messung bei 55 °C gemäß DIN 53 513, Dehnungsdurchlauf (engl. "strain sweep")
- Mooney-Viskosität gemäß ASTM D1646; z.B. ML1+4 bei 100 °C (Mooney-Einheiten M.E.)
- Mooney-Scorch Verhalten bei 130 °C gemäß ASTM D1646: t_{5ME} Zeit bis 5 M. E. erreicht sind sowie t_{35ME} Zeit mit 35 M.E. erreicht sind
- Stahlcordhaftung gemäß ASTM D1871 vor Alterung bei Raumtemperatur,
   PFₘₑₐₙ = mittlere Auszugskraft (mean pull-out force)
   PF_{STDV} = Standardabweichung der Auszugskraft
   PFₘᵢₙ = minimale Auszugskraft
   PFₘₐₓ = maximale Auszugskraft
   Einbettlänge 12,5 mm, Auszugsgeschwindigkeit 125 mm/min, Messung der Herausziehkraft, vermessingter Kerndraht (Stahl) mit einem Durchmesser von 1,6 mm wird zwischen zwei Platten aus einer Kautschukmischung einvulkanisiert.

Wie in Tabelle 1 erkennbar, zeigen die erfindungsgemäßen Varianten E1 bis E4 der Gummierungsmischung der Kerndrahtgummierung mit Pyrolyse-Ruß als Teil des Füllstoffsystems im Vergleich zu V1 ohne Pyrolyse-Ruß vergleichbare Eigenschaften. Insbesondere wird die für die Haltbarkeit wichtige Auszugskraft und damit die Haftung an beschichtetem Stahl nicht negativ beeinträchtigt. Zudem sind die für die Stabilität wichtigen Eigenschaften Härte und Steifigkeit (E', M50, M100) auf vergleichbarem Niveau.

Die erfindungsgemäßen Kautschukmischungen E1 bis E4 sind trotz geringfügigem Anstieg der Mooney-Viskosität gut prozessierbar. Insbesondere wird das sogenannte Mooney-Scorch-Verhalten nicht negativ beeinträchtigt.

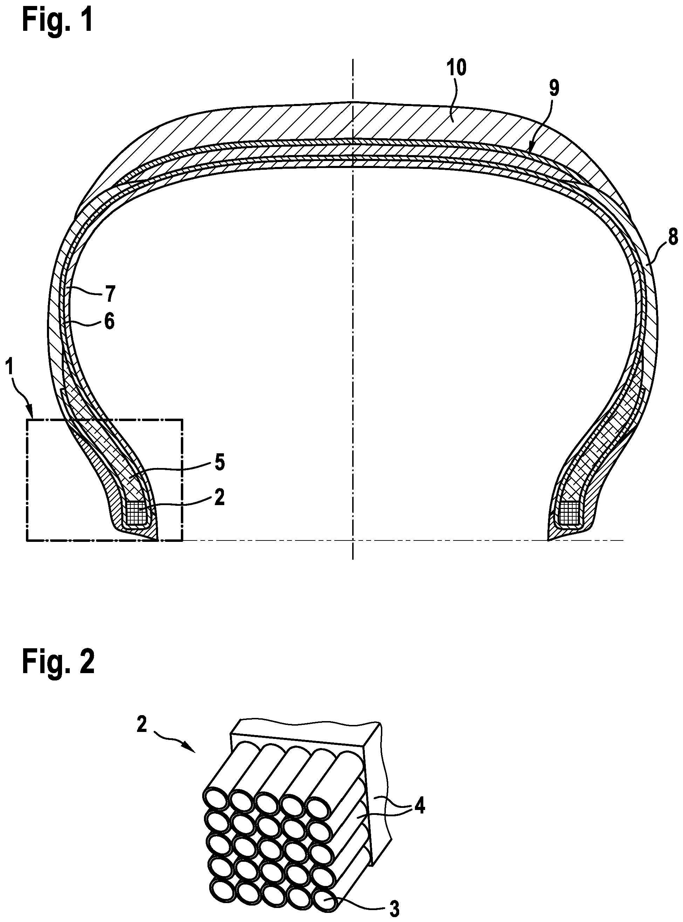

Ein Beispiel für einen erfindungsgemäßen Fahrzeugreifen ist in den Figuren 1 und 2 schematisch dargestellt.

Fig. 1 zeigt dabei einen Querschnitt des Reifens, bei dem schematisch die erfindungsrelevanten Bauteile und sonstige übliche Bauteile gezeigt sind. Der Reifen in Fig. 1 weist an jeder Seite einen Wulstbereich 1 auf. Der Wulstbereich 1 ist der Verständlichkeit halber durch einen Rahmen hervorgehoben aber nicht streng auf den vom Rahmen umfassten Bereich beschränkt. Der Wulstbereich umfasst insbesondere einen Wulstkern 2, welcher in Fig. 2 detaillierter abgebildet ist, wie unten erläutert. In Fig. 1 sind ferner Wulstkernreiter 5, eine um die Wulstkerne 2 umlaufende Karkasse 6, eine Innenschicht 7, Seitenwände 8, Gürtelpaket 9 und ein Laufstreifen 10 schematisch dargestellt.

Erfindungswesentlich umfasst der Wulstkern 2 wie es in Fig. 2 erkennbar ist Kerndrähte 3, welche jeweils von einer Kerndrahtgummierung 4 ummantelt sind. Bei der Kautschukmischung der Kerndrahtgummierung handelt es sich beispielsweise um eine der oben gezeigten Mischungen E1 bis E4.
In Fig. 2 ist auch erkennbar, dass nicht nur jeder einzelne Draht 3 von der Gummierung 4 umgeben ist, sondern dass zusätzlich das Gebilde aus gummierten Drähten nach außen von der Kerndrahtgummierung 4 umgeben ist.
Beispielsweise handelt es sich hierbei um jeweils die gleiche Mischung.
In Fig. 1 und 2 sind die Wulstkerne mit einem quasi quadratischen Querschnitt schematisch und der Einfachheit halber dargestellt. Die Erfindung ist nicht auf diese Form der Wulstkerne beschränkt. Stattdessen ist jede denkbare Form erfindungsgemäß umfasst.
Der erfindungsgemäße Reifen ist bei vergleichbarer Haltbarkeit und Stabilität durch die Verwendung von Pyrolyse-Ruß als Teil des Füllstoffsystems (E1 bis E3) oder als alleiniger Füllstoff (E4) ökologisch und ökonomisch optimiert, wie es insbesondere an den Prediktoren für E1 bis E4 wie in Tabelle 1 gezeigt erkennbar ist.

**Tabelle 1**

| **Bestandteile** | **Einheit** | **V1** | **E1** | **E2** | **E3** | **E4** |
|---|---|---|---|---|---|---|
| IR | phr | 10 | 10 | 10 | 10 | 10 |
| ESBR | phr | 90 | 90 | 90 | 90 | 90 |
| Ruß N 660 | phr | 124 | 100 | 70 | 40 | - |
| Pyrolyse-Ruß ^{a)} | phr | - | 26 | 59 | 92 | 137 |
| (Pyrolyse-Ruß | Gew.-% des FSS | 0 | 20 | 45 | 70 | 100 |
| Kaolin | phr | 20 | 20 | 20 | 20 | 20 |
| Weichmacher RAE + Harz | phr | 16 | 16 | 16 | 16 | 16 |
| Sonst. Zusatzstoffe ^{b)} | phr | 8 | 8 | 8 | 8 | 8 |
| TBBS | phr | 0,8 | 0,8 | 0,8 | 0,8 | 0,8 |
| Schwefel | phr | 4,9 | 4,9 | 4,9 | 4,9 | 4,9 |
| | | | | | | |

| **Eigenschaften** | | | | | | |
|---|---|---|---|---|---|---|
| Mooney Viskosität VL1+4 | M. E. | 107 | 106 | 109 | 112 | 134 |
| t_{5ME} | min | 22 | 23,5 | 23,2 | 22,9 | 20,9 |
| t_{35ME} | min | 27,6 | 29,7 | 30,2 | 30,6 | 29,4 |
| Zugfestigkeit | MPa | 12 | 13 | 12 | 12 | 12 |
| Bruchdehnung | % | 136 | 168 | 173 | 184 | 191 |
| Modul 50 | MPa | 5 | 5 | 5 | 4 | 5 |
| Modul 100 | MPa | 10 | 9 | 9 | 8 | 8 |
| E'ₘₑₐₙ | MPa | 0,298 | 0,292 | 0,288 | 0,291 | 0,281 |
| Shore Härte b. RT | Shore A | 83 | 84 | 84 | 84 | 85 |
| Shore Härte 70 °C | Shore A | 79 | 79 | 79 | 78 | 79 |
| PFₘₑₐₙ | N | 1256 | 1293 | 1301 | 1275 | 1297 |
| PF_{STDV} | N | 98 | 27 | 21 | 52 | 33 |
| PFₘᵢₙ | N | 1000 | 1249 | 1262 | 1171 | 1223 |
| PFₘₐₓ | N | 1372 | 1326 | 1333 | 1321 | 1331 |

### Bezugszeichenliste

### (Teil der Beschreibung)

- 1: Wulstbereich
- 2: Wulstkern
- 3: Kerndrähte
- 4: Kerndrahtgummierung
- 5: Wulstkernreiter
- 6: Karkasse
- 7: Innenschicht
- 8: Seitenwand
- 9: Gürtelpaket
- 10: Laufstreifen

## Patentansprüche

1. Fahrzeugreifen, umfassend
Wulstbereiche (1) mit Wulstkernen (2) aus Kerndrähten (3) und wenigstens einer Kerndrahtgummierung (4), wobei jeder Kerndraht (3) wenigstens von einer Kerndrahtgummierung (4) umgeben ist,
**dadurch gekennzeichnet, dass**
wenigstens eine Kerndrahtgummierung (4) wenigstens eine Kautschukmischung umfasst, die ein Füllstoffsystem mit 5 bis 100 Gew.-% wenigstens eines Pyrolyse-Rußes und 0 bis 95 Gew.-% wenigstens eines Industrierußes jeweils bezogen auf die Gesamtmenge aus Pyrolyse-Ruß und Industrieruß enthält, wobei der Pyrolyse-Ruß mittels Pyrolyse aus Altreifen und/oder vulkanisierten Produktionsabfällen aus der Reifenherstellung und/oder vulkanisierten Schläuchen hergestellt ist.

2. Fahrzeugreifen nach Anspruch 1, **dadurch gekennzeichnet, dass** die Kautschukmischung wenigstens einen Dienkautschuk enthält, der ausgewählt ist aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR).

3. Fahrzeugreifen nach einem der vorherigen Ansprüche, **dadurch gekennzeichnet, dass** der Pyrolyse-Ruß einen Aschegehalt von 5 bis 30 Gew.-% aufweist.

4. Fahrzeugreifen nach einem der vorherigen Ansprüche, **dadurch gekennzeichnet, dass** der Pyrolyse-Ruß einen Schwefelgehalt von größer als 1 Gew.-% aufweist.

5. Fahrzeugreifen nach einem der vorherigen Ansprüche, **dadurch gekennzeichnet, dass** das Füllstoffsystem wenigstens einen Industrieruß umfasst, welcher eine DBP-Zahl gemäß ASTM D 2414 von 60 bis 130 ml/100 g und eine Jodadsorptionszahl gemäß ASTM D 1510 von 25 bis 60 g/kg aufweist.

6. Fahrzeugreifen nach einem der vorherigen Ansprüche, **dadurch gekennzeichnet, dass** der Anteil des wenigstens einen Pyrolyse-Rußes am Füllstoffsystem 15 bis 100 Gew.-% beträgt.

7. Fahrzeugreifen nach Anspruch 6, **dadurch gekennzeichnet, dass** der Anteil des wenigstens einen Pyrolyse-Rußes am Füllstoffsystem 15 bis 55 Gew.-% beträgt.

8. Fahrzeugreifen nach Anspruch 6, **dadurch gekennzeichnet, dass** der Anteil des wenigstens einen Pyrolyse-Rußes am Füllstoffsystem 55 bis 100 Gew.-% beträgt.

9. Fahrzeugreifen nach Anspruch 8, **dadurch gekennzeichnet, dass** der Anteil des wenigstens einen Pyrolyse-Rußes am Füllstoffsystem 70 bis 100 Gew.-% beträgt.

10. Fahrzeugreifen nach einem der vorherigen Ansprüche, **dadurch gekennzeichnet, dass** die Kautschukmischung der Kerndrahtgummierung (4) insgesamt 80 bis 160 phr des Füllstoffsystems aus Pyrolyse-Ruß und Industrieruß enthält.

## Claims

1. Vehicle tyre, comprising
bead regions (1) having bead cores (2) composed of core wires (3) and at least one core wire rubberization (4), wherein each core wire (3) is at least surrounded by a core wire rubberization (4),
**characterized in that**
at least one core wire rubberization (4) comprises at least one rubber mixture containing a filler system comprising 5% to 100% by weight of at least one pyrolysis carbon black and 0% to 95% by weight of at least one industrial carbon black in each case based on the total amount of pyrolysis carbon black and industrial carbon black, wherein the pyrolysis carbon black is produced by pyrolysis from end-of-life tyres and/or vulcanized production scrap from tyre production and/or vulcanized hoses.

2. Vehicle tyre according to Claim 1, **characterized in that** the rubber mixture contains at least one diene rubber selected from the group consisting of natural polyisoprene (NR), synthetic polyisoprene (IR), butadiene rubber (BR), solvent-polymerized styrene-butadiene rubber (SSBR) and emulsion-polymerized styrene-butadiene rubber (ESBR).

3. Vehicle tyre according to either of the preceding claims, **characterized in that** the pyrolysis carbon black has an ash content of 5% to 30% by weight.

4. Vehicle tyre according to any of the preceding claims, **characterized in that** the pyrolysis carbon black has a sulfur content of more than 1% by weight.

5. Vehicle tyre according to any of the preceding claims, **characterized in that** the filler system comprises at least one industrial carbon black having a DBP number according to ASTM D 2414 of 60 to 130 ml/100 mg and an iodine adsorption number according to ASTM D 1510 of 25 to 60 g/kg.

6. Vehicle tyre according to any of the preceding claims, **characterized in that** the proportion of the at least one pyrolysis carbon black in the filler system is 15% to 100% by weight.

7. Vehicle tyre according to Claim 6, **characterized in that** the proportion of the at least one pyrolysis carbon black in the filler system is 15% to 55% by weight.

8. Vehicle tyre according to Claim 6, **characterized in that** the proportion of the at least one pyrolysis carbon black in the filler system is 55% to 100% by weight.

9. Vehicle tyre according to Claim 8, **characterized in that** the proportion of the at least one pyrolysis carbon black in the filler system is 70% to 100% by weight.

10. Vehicle tyre according to any of the preceding claims, **characterized in that** the rubber mixture of the core wire rubberization (4) altogether contains 80 to 160 phr of the filler system composed of pyrolysis carbon black and industrial carbon black.

## Revendications

1. Pneu de véhicule, comprenant
des zones de talon (1) comprenant des tringles (2) constituées par des fils de tringle (3) et au moins un caoutchoutage de fil de tringle (4), chaque fil de tringle (3) étant entouré au moins par un caoutchoutage de fil de tringle (4),
**caractérisé en ce que**
au moins un caoutchoutage de fil de tringle (4) comprend au moins un mélange de caoutchouc, qui contient un système de charges contenant 5 à 100 % en poids d'au moins un noir de carbone de pyrolyse et 0 à 95 % en poids d'au moins un noir de carbone industriel, à chaque fois par rapport à la quantité totale de noir de carbone de pyrolyse et de noir de carbone industriel, le noir de carbone de pyrolyse étant fabriqué par pyrolyse à partir de pneus usés et/ou de déchets de production vulcanisés issus de la fabrication de pneus et/ou de tuyaux vulcanisés.

2. Pneu de véhicule selon la revendication 1, **caractérisé en ce que** le mélange de caoutchouc contient au moins un caoutchouc diénique, qui est choisi dans le groupe constitué par le polyisoprène naturel (NR), le polyisoprène synthétique (IR), le caoutchouc de butadiène (BR), le caoutchouc de styrène-butadiène polymérisé en solution (SSBR) et le caoutchouc de styrène-butadiène polymérisé en émulsion (ESBR).

3. Pneu de véhicule selon l'une quelconque des revendications précédentes, **caractérisé en ce que** le noir de carbone de pyrolyse présente une teneur en cendres de 5 à 30 % en poids.

4. Pneu de véhicule selon l'une quelconque des revendications précédentes, **caractérisé en ce que** le noir de carbone de pyrolyse présente une teneur en soufre supérieure à 1 % en poids.

5. Pneu de véhicule selon l'une quelconque des revendications précédentes, **caractérisé en ce que** le système de charges comprend au moins un noir de carbone industriel, qui présente un indice DBP selon ASTM D 2414 de 60 à 130 ml/100 g et un indice d'adsorption d'iode selon ASTM D 1510 de 25 à 60 g/kg.

6. Pneu de véhicule selon l'une quelconque des revendications précédentes, **caractérisé en ce que** la proportion dudit au moins un noir de carbone de pyrolyse dans le système de charges est de 15 à 100 % en poids.

7. Pneu de véhicule selon la revendication 6, **caractérisé en ce que** la proportion dudit au moins un noir de carbone de pyrolyse dans le système de charges est de 15 à 55 % en poids.

8. Pneu de véhicule selon la revendication 6, **caractérisé en ce que** la proportion dudit au moins un noir de carbone de pyrolyse dans le système de charges est de 55 à 100 % en poids.

9. Pneu de véhicule selon la revendication 8, **caractérisé en ce que** la proportion dudit au moins un noir de carbone de pyrolyse dans le système de charges est de 70 à 100 % en poids.

10. Pneu de véhicule selon l'une quelconque des revendications précédentes, **caractérisé en ce que** le mélange de caoutchouc du caoutchoutage de fil de tringle (4) contient au total 80 à 160 pce du système de charges constitué par le noir de carbone de pyrolyse et le noir de carbone industriel.
